# EUROPEAN PATENT APPLICATION

(11) **EP 4 761 122 A1**
(43) Date of publication of application: **17.06.2026**
(21) Application number: 24867105.9
(22) Date of filing: 30.07.2024
(51) Int. Cl.: H04B 1/401

(54) **RADIO-FREQUENCY FRONT-END MODULE AND ELECTRONIC DEVICE**

(30) Priority: 22.09.2023 CN 202311228190
(71) Applicant: Honor Device Co., Ltd., Shenzhen, Guangdong 518040 (CN)
(72) Inventor: CHEN, Dan, Shenzhen, Guangdong 518040 (CN); GAO, Peng, Shenzhen, Guangdong 518040 (CN)
(74) Representative: Gill Jennings & Every LLP
(86) International application number: PCT/CN2024/108371
(87) International publication number: WO 2025/060688

(57) **Abstract**

Embodiments of this application disclose a radio frequency front-end module and an electronic device. By reusing a filter inside the radio frequency front-end module, the radio frequency front-end module can process a radio frequency signal from a single-band antenna or a radio frequency signal from a multi-band antenna through the filter, which can obviate a need for an external filter in a separated antenna solution.

## Description

This application claims priority to Chinese Patent Application No. 202311228190.8, filed with the China National Intellectual Property Administration on September 22, 2023 and entitled "RADIO FREQUENCY FRONT-END MODULE AND ELECTRONIC DEVICE", which is incorporated herein by reference in its entirety.

### TECHNICAL FIELD

This application relates to the field of wireless communication technologies, and in particular, to a radio frequency front-end module and an electronic device.

### BACKGROUND

With rapid development of wireless communication technologies, there is an increasingly urgent need for a higher data transmission rate and a more reliable communication connection. As an important component of a wireless communication system, an antenna plays a crucial role in receiving and sending radio signals.

An antenna solution of a terminal device is greatly influenced by an appearance and specifications of a product. Specifically, a radio frequency front-end module and a middle high band (middle high band, MHB) antenna in the terminal device may be designed by selecting a combined antenna solution or a separated antenna solution according to product requirements. The combined antenna solution refers to receiving and sending signals across all bands by using a multi-band antenna, and is applicable to a communication scenario with varying frequencies. However, this solution also increases design difficulty and a current loss, and reduces a transmit power and receive sensitivity. The separated antenna solution refers to in addition to receiving and sending signals by using a multi-band antenna, adding a single-band antenna to receive and send signals in a specific band, and is applicable to a communication scenario with a fixed frequency, which can improve a transmit power and receive sensitivity, and can reduce design difficulty and a current loss.

Currently, in the separated antenna solution, an external filter needs to be added to cooperate with the single-band antenna, which increases hardware resources.

### SUMMARY

Embodiments of this application provide a radio frequency front-end module and an electronic device. By reusing a filter inside the radio frequency front-end module, the radio frequency front-end module can process a radio frequency signal from a single-band antenna or a radio frequency signal from a multi-band antenna through the filter, which can obviate a need for an external filter in a separated antenna solution.

According to a first aspect, an embodiment of this application provides a radio frequency front-end module, including an antenna switch, a single pole double throw switch, a first filter, and a second filter, where the first filter and the second filter each correspond to a filtering band; the antenna switch is connected to a first antenna, and the single pole double throw switch is connected to a second antenna; the antenna switch is configured to gate a radio frequency signal received by the first antenna to the single pole double throw switch and/or the second filter; and the single pole double throw switch is configured to gate the radio frequency signal passing through the first antenna and the antenna switch or a radio frequency signal received by the second antenna to the first filter.

In this embodiment of this application, the single pole double throw switch is added in the radio frequency front-end module, to gate the radio frequency signal passing through the first antenna and the antenna switch or the radio frequency signal received by the second antenna to the first filter. The radio frequency front-end module implements reuse of the filter, which can obviate a need for an external filter in a separated antenna solution, reduce space occupied by hardware resources, and reduce costs of the hardware resources.

With reference to the first aspect, in a possible implementation, a first terminal of the single pole double throw switch is connected to a first output terminal of the antenna switch; and a second terminal of the single pole double throw switch is connected to the second antenna, and a common terminal of the single pole double throw switch is connected to the first filter.

With reference to the first aspect, in a possible implementation, an input terminal of the antenna switch is connected to the first antenna; the first output terminal of the antenna switch is connected to the first terminal of the single pole double throw switch; and a second output terminal of the antenna switch is connected to the second filter.

With reference to the first aspect, in a possible implementation, the radio frequency front-end module further includes a first amplification module and a second amplification module, where the first amplification module is configured to amplify a radio frequency signal output by the first filter, and the second amplification module is configured to amplify a radio frequency signal output by the second filter.

With reference to the first aspect, in a possible implementation, the radio frequency front-end module further includes a third filter, where the third filter, the first filter, and the second filter all correspond to different filtering bands; and the third filter is connected to the antenna switch.

With reference to the first aspect, in a possible implementation, the antenna switch is specifically configured to send the radio frequency signal received by the first antenna to at least one of the single pole double throw switch, the second filter, and the third filter.

With reference to the first aspect, in a possible implementation, the radio frequency front-end module further includes a matching network, where the matching network is used for implementing impedance matching between the first antenna or the second antenna and the radio frequency front-end module.

According to a second aspect, an embodiment of this application provides a radio frequency front-end module, including an antenna switch, a first filter, and a second filter, where the first filter and the second filter each correspond to a filtering band; the antenna switch is connected to a first antenna, and the antenna switch is connected to a second antenna; and the antenna switch is configured to conduct a radio frequency signal of the second antenna to the first filter, or conduct a radio frequency signal of the first antenna to the first filter and/or the second filter.

In this embodiment of this application, the antenna switch is connected to the first antenna, and the antenna switch is connected to the second antenna. The antenna switch can conduct the radio frequency signal of the second antenna to the first filter, or conduct the radio frequency signal of the first antenna to the first filter and/or the second filter. In this embodiment of this application, the filter in the radio frequency front-end module is reused, which can obviate a need for an external filter in a separated antenna solution, reduce space occupied by hardware resources, and reduce costs of the hardware resources.

With reference to the second aspect, in a possible implementation, the antenna switch is further configured to simultaneously conduct the radio frequency signal of the second antenna to the first filter and conduct the radio frequency signal of the first antenna to the second filter.

With reference to the second aspect, in a possible implementation, the antenna switch includes a single pole single throw switch, a first switch transistor, and a second switch transistor, where the single pole single throw switch is located between the second antenna and the first filter, the first switch transistor is located between the first antenna and the first filter, and the second switch transistor is located between the first antenna and the second filter.

With reference to the second aspect, in a possible implementation, the first switch transistor is turned off when the single pole single throw switch is turned on; and the single pole single throw switch is turned off when the first switch transistor is turned on.

In this embodiment of this application, in a combined antenna solution, in the radio frequency front-end module, the first switch transistor is turned on and/ the second switch transistor is turned on, and the single pole single throw switch is turned off. In this case, the radio frequency signal from the first antenna does not pass through the single pole single throw switch. It can be seen that in the combined antenna solution, the single pole single throw switch does not cause an additional loss, and does not affect performance of the combined antenna solution.

In the foregoing embodiment, the single pole single throw switch and the first switch transistor are respectively a switch between the second antenna and the first filter and a switch between the first antenna and the first filter. The single pole single throw switch and a first switch cannot be turned on simultaneously. In addition, the radio frequency front-end module cannot simultaneously receive radio frequency signals from the first antenna and the second antenna to a same filter.

With reference to the second aspect, in a possible implementation, the antenna switch further includes a third switch transistor and a fourth switch transistor, where a first terminal of the third switch transistor is connected between the first switch transistor and the first filter, and a second terminal of the third switch transistor is grounded; and a first terminal of the fourth switch transistor is connected between the second switch transistor and the second filter, and a second terminal of the fourth switch transistor is grounded.

In the foregoing embodiment, a third switch and a fourth switch are configured to improve isolation between different receive paths and reduce signal interference from another receive path.

With reference to the second aspect, in a possible implementation, the radio frequency front end may include a first amplification module and a second amplification module, where the first amplification module is configured to amplify a radio frequency signal output by the first filter, and the second amplification module is configured to amplify a radio frequency signal output by the second filter.

According to a third aspect, an embodiment of this application provides an electronic device, including the radio frequency front-end module according to the first aspect or the second aspect, and the radio frequency front-end module in any possible implementation in the first aspect or the second aspect.

### BRIEF DESCRIPTION OF DRAWINGS

To describe technical solutions in embodiments of this application more clearly, the following briefly describes accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1A is an exemplary diagram of a circuit of a radio frequency front-end module according to an embodiment of this application;
FIG. 1B is an exemplary diagram of a circuit of a radio frequency front-end module according to an embodiment of this application;
FIG. 2 is an exemplary diagram of a structure of a radio frequency front-end module according to an embodiment of this application;
FIG. 3 is an exemplary diagram of a circuit of a radio frequency front-end module according to an embodiment of this application;
FIG. 4 is an exemplary diagram of a structure of another radio frequency front-end module according to an embodiment of this application;
FIG. 5 is an exemplary diagram of a circuit of another radio frequency front-end module according to an embodiment of this application;
FIG. 6 is an exemplary diagram of a structure of a wireless communication system according to an embodiment of this application; and
FIG. 7 is a schematic diagram of a wireless communication module in a mobile phone according to an embodiment of this application.

### DESCRIPTION OF EMBODIMENTS

To make objectives, technical solutions, and advantages of embodiments of this application clearer, the following clearly and completely describes the solutions in the embodiments of this application with reference to accompanying drawings in the embodiments of this application. Clearly, the described embodiments are some embodiments of this application rather than all embodiments. All other embodiments obtained by a person of ordinary skill in the art based on the embodiments of this application without creative efforts shall fall within the protection scope of this application.

For ease of description of embodiments of a radio frequency front-end module in this application, technical terms are described herein.
1. Radio frequency front-end module (radio frequency Front-end Module). It is configured to process a radio frequency signal, to convert a radio signal received from an antenna into a digital signal for subsequent digital processing and a communication function. In the embodiments of this application, the radio frequency front-end module may also be referred to as a radio frequency front-end circuit.
2. Antenna (antenna, ANT). It is configured to receive a radio frequency signal from a radio channel during reception and to radiate a radio frequency signal to a radio channel during transmission.
3. Antenna switch (antenna switch, ASW). It is connected between an antenna and a signal processing module, and is configured to control turning on or turning off of one or more paths from the antenna to the signal processing module. Exemplarily, the ASW may be a multi-pole multi-throw switch, configured to implement switching between different signal paths, including switching between reception and transmission, switching between different bands, and the like. In the embodiments of this application, the antenna switch may also be referred to as an antenna selection switch module.
4. Low noise amplifier (low noise amplifier, LNA). It mainly functions to amplify a power of a received radio frequency signal, reduce a noise figure of a radio-frequency-signal receive path, and improve a receive sensitivity index. In the embodiments of this application, the low noise amplifier may also be referred to as an amplification module.
   The radio-frequency-signal receive path refers to a route for receiving a radio frequency signal in a radio frequency front-end module. The route may include a plurality of links from an antenna switch to a filter and then to an amplification module and the like, to complete reception and processing of the radio frequency signal. In the embodiments of this application, the radio-frequency-signal receive path may also be referred to as a receive path.
5. Filter (filter). It is configured to filter out a specific frequency component of a radio frequency signal to obtain a signal of a specific frequency.

In the embodiments of this application, filters corresponding to different bands may filter a radio frequency signal received by an antenna, to obtain radio frequency signals corresponding to the different bands.

Exemplarily, the radio frequency signal received by the antenna may include a signal in a B1 band, a signal in a B3 band, a signal in a B7 band, a signal in a B39 band, a signal in a B40 band, and a signal in a B41 band; and a filter corresponding to the B41 band is configured to filter out non-B41 band signals to obtain the signal in the B41 band.

In the embodiments of this application, for ease of description, a signal in a Bn band is referred to as a Bn signal for short, for example, the signal in the B41 band is referred to as a B41 signal for short; and a filter corresponding to the Bn band is referred to as a Bn filter, for example, the filter corresponding to the B41 band is referred to as a B41 filter for short. Bn may be B1, B3, B7, B39, B40, B41, or the like. This is not limited in the embodiments of this application.

6. Single pole single throw (single pole single throw, SPST) switch. It controls a radio-frequency-signal path to be connected or disconnected. When the single pole single throw switch is in an on state, two connection points are connected; and when the single pole single throw switch is in an off state, the two connection points are disconnected.

7. Single pole double throw (single pole double throw switch, SPDT) switch. It is a switch with two inputs and one output, or may be a switch with one input and two outputs. A function of the single pole double throw switch is to gate a radio frequency signal to one of two paths.

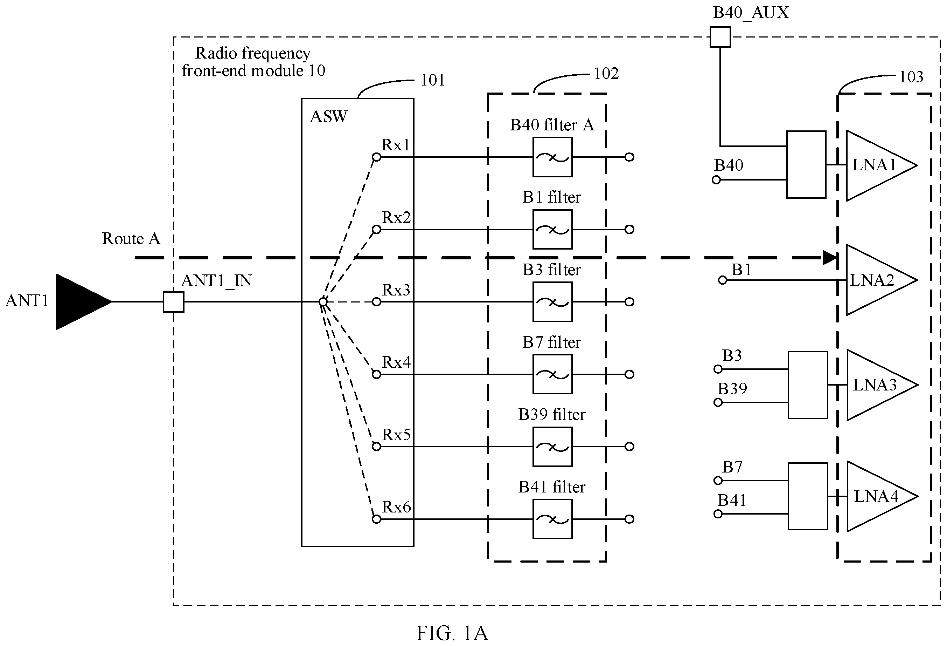

First, a combined antenna solution is exemplarily described through FIG. 1A. In this antenna solution, signals in six bands (B1/B3/B7/B39/B40/B41) may be transmitted and received on one antenna (namely, a first antenna).

The combined antenna solution includes the first antenna (referred to as ANT1 for short) and a radio frequency front-end module 10. The ANT1 is connected to the radio frequency front-end module 10 through a port ANT1_IN of the radio frequency front-end module 10. The radio frequency front-end module 10 may include an antenna selection switch module 101, a filter module 102, and an amplifier module 103, and may further include several switches.

The filter module 102 may include filters respectively corresponding to six bands: respectively a B1 filter, a B3 filter, a B7 filter, a B39 filter, a B40 filter A, and a B41 filter. The amplifier module 103 may include four amplification modules: respectively a first amplification module (referred to as LNA1 for short), a second amplification module (referred to as LNA2 for short), a third amplification module (referred to as LNA3 for short), and a fourth amplification module (referred to as LNA4 for short). It is to be noted that, in FIG. 1A, for example, blank rectangles are used to represent three switches: respectively a switch connected to the LNA1, a switch connected to the LNA3, and a switch connected to the LNA4.

In an implementation, the radio frequency front-end module 10 may switch receive paths of the first antenna through the antenna selection switch module 101 to support various bands.

As shown in FIG. 1A, receive paths of six bands are similar. For each receive path, a radio frequency signal is received through entering the input port ANT_IN of the radio frequency front-end module 10 from the ANT1, and then entering the amplifier module 103 after a filter 102 corresponding to the receive path is selected through the antenna selection switch module 101 of the radio frequency front-end module 10. It is to be noted that, the foregoing radio frequency front-end module 10 may further include a matching network and the like; and the foregoing B3 signal, B7 signal, B39 signal, B40 signal, and B41 signal are received further through turned on switches (shown by the blank rectangles in FIG. 1A) and the like.

As shown in FIG. 1A, the radio frequency front-end module 10 further include an input port B40_AUX. The input port B40_AUX and the B40 filter A (a component in a receive path of the B40 filter A) are connected to a same switch (referred to as a B40 switch). The input port B40_AUX may be configured to be connected to a single-band antenna, an external B40 filter (where the external B40 filter may be referred to as a B40 filter B to be distinguished from the B40 filter A), and the like for receiving a single-band signal, namely, the B40 signal.

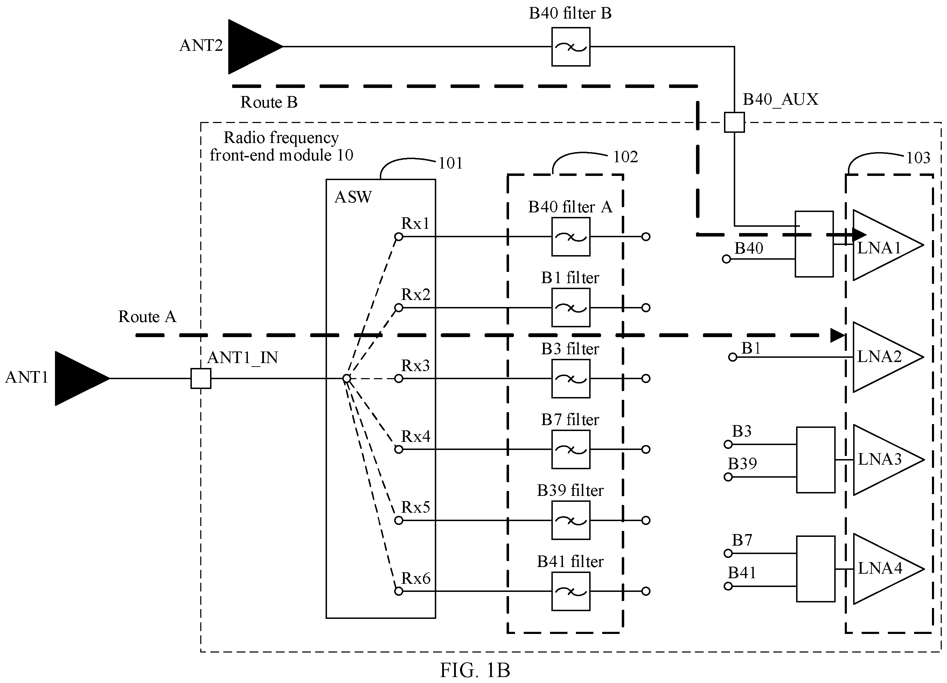

Next, a separated antenna solution is described by using an example in which the B40 signal is received through a single antenna. As shown in FIG. 1B, a second antenna (referred to as ANT2) is connected to the B40 filter B, and the B40 filter B is connected to the B40 switch through the input port B40_AUX.

It is to be noted that, this embodiment of this application is described with an example in which B40 is separated exemplarily. In other embodiments, a radio frequency signal in another band may alternatively be separated and received through a single antenna. A band and the like of a separated radio frequency signal are not limited in the embodiments of this application.

As shown in FIG. 1B, a receive path route A exemplarily shows a receive path A (referred to as PathA for short) of the B40 signal in the combined antenna solution, and a receive path other than B40 is similar to the PathA. A route B exemplarily shows a receive path B (referred to as PathB for short) of the B40 signal in the separated antenna solution.

For the combined antenna solution, as shown in the route A, the B40 signal, a radio frequency signal, is received through entering the ANT port of the radio frequency front-end module 10 from the ANT1, and then entering the amplifier module 103 after the filter 102 corresponding to the receive path is selected through the antenna selection switch module 101 in the radio frequency front-end module 10.

For the separated antenna solution, because the ANT2 is an independent signal, the receive path is shown in the route B, where the B40 signal, the radio frequency signal, is received through entering the B40 filter B from the ANT2, then entering the input port B40_AUX of the radio frequency front-end module 10, and passing through the LNA1 in the radio frequency front-end module 10.

It is to be noted that, the ANT1 shown in FIG. 1B is a multi-band antenna, and the ANT2 is a single-band antenna.

In the separated antenna solution, when the B40 radio frequency signal is received by using the ANT2 alone, an external B40 filter B needs to be added. In this case, the internal B40 filter A of the radio frequency front-end module 10 is idle, causing a waste of resources.

In view of this, in the embodiments of this application, filter reuse is implemented by combining a receive path of the single-band antenna and a receive path used by the multi-band antenna, which can reduce space occupied by hardware resources and reduce costs of the hardware resources.

The radio frequency front-end module provided in this application is applicable to a terminal device (such as a mobile phone or a tablet computer) that uses the separated antenna solution and the combined antenna solution for wireless communication.

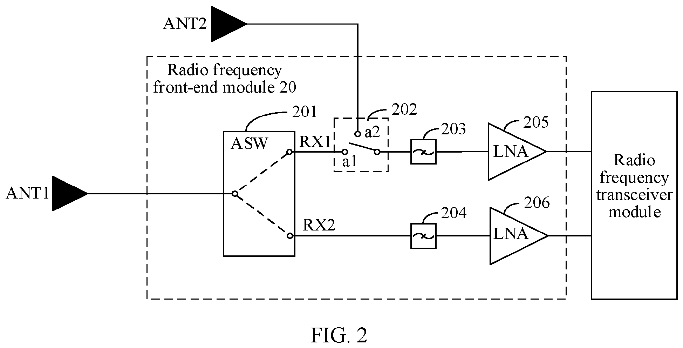

The radio frequency front-end module provided in the embodiments of this application is exemplarily described below through FIG. 2 to FIG. 4.

FIG. 2 is a schematic diagram of a structure of a radio frequency front-end module 20 according to an embodiment of this application. The radio frequency front-end module 20 is coupled to a first antenna (referred to as ANT1 for short) and a second antenna (referred to as ANT2 for short) to receive a radio frequency signal, processes the received radio frequency signal, and then sends a processed radio frequency signal to a lower-level conversion circuit (such as a radio frequency transceiver module exemplarily shown in FIG. 2).

As shown in FIG. 2, the radio frequency front-end module 20 may include an antenna switch 201, a single pole double throw switch 202, a first filter 203, a second filter 204, a first amplification module 205, and a second amplification module 206. The antenna switch 201 may be configured to gate on a receive path from the ANT1 to the single pole double throw switch 202 and/or gate on a receive path from the ANT1 to the second filter 204.

A first input port of the antenna switch 201 is connected to the ANT1, a first output terminal Rx1 of the antenna switch 201 is connected to a first terminal (also referred to as a contact a1) of the single pole double throw switch 202, and a second output terminal Rx2 of the antenna switch 201 is connected to a first terminal of the second filter 204.

The single pole double throw switch 202 may be configured to gate on a receive path (referred to as a first path) from the ANT2 to the first filter 203 or gate on a receive path (referred to as a second path) from the antenna switch 201 to the first filter 203. The first terminal of the single pole double throw switch 202 is connected to the first output terminal Rx1 of the antenna switch 201, a second terminal (also referred to as a contact a2) of the single pole double throw switch 202 is connected to the ANT2, and a common terminal of the single pole double throw switch 202 is connected to a first terminal of the first filter 203.

In some embodiments, when the single pole double throw switch 202 is switched to the contact a1, the single pole double throw switch 202 connects the receive path from the antenna switch 201 to the first filter 203; and when the single pole double throw switch 202 is switched to the contact a2, the single pole double throw switch 202 connects the receive path from the ANT2 to the first filter 203.

It is to be noted that, at a same moment, the single pole double throw switch 202 can connect only one of the first path and the second path.

The first filter 203 is a filter corresponding to a first radio frequency signal, and the first filter 203 may be configured to filter out a signal other than the first radio frequency signal. The first terminal of the first filter 203 is connected to the common terminal of the single pole double throw switch 202, and a second terminal of the first filter 203 is connected to a first terminal of the first amplification module 205.

The second filter 204 is a filter corresponding to a second radio frequency signal, and the second filter 204 may be configured to filter out a signal other than the second radio frequency signal. The first terminal of the second filter 204 is connected to the second output terminal Rx2 of the antenna switch 201, and a second terminal of the second filter 204 is connected to a first terminal of the second amplification module 206. A band of the first radio frequency signal is different from a band of the second radio frequency signal.

The first amplification module 205 and the second amplification module 206 may be configured to amplify a received radio frequency signal. The first terminal of the first amplification module 205 is connected to the second terminal of the first filter 203, and a second terminal of the first amplification module 205 is connected to the radio frequency transceiver module. The first terminal of the second amplification module 206 is connected to the second terminal of the second filter 204, and a second terminal of the second amplification module 206 is connected to the radio frequency transceiver module. Both the first amplification module 205 and the second amplification module 206 may be low noise amplifiers.

In an implementation, when the radio frequency front-end module 20 uses the combined antenna solution to receive a target radio frequency signal, the antenna switch 201 and the single pole double throw switch 202 in the radio frequency front-end module 20 may gate on a filter (referred to as a target filter) corresponding to the target radio frequency signal. In this case, after a radio frequency signal received by the ANT1 enters the radio frequency front-end module 20, the target radio frequency signal is obtained through filtering by the target filter. Further, the target radio frequency signal is then amplified by an amplification module connected to the target filter, to obtain an amplified radio frequency signal. Finally, the amplified radio frequency signal enters the radio frequency transceiver module, so that the target radio frequency signal is received. The target radio frequency signal may be the foregoing first radio frequency signal and/or the foregoing second radio frequency signal.

Exemplarily, when the radio frequency front-end module 20 uses the combined antenna solution to receive the first radio frequency signal, the receive path from the ANT1 to the first output terminal Rx1 in the antenna switch 201 is connected, and the single pole double throw switch 202 is switched to the contact a1. The radio frequency signal received by the ANT1 enters the first filter 203 through the antenna switch 201 and the single pole double throw switch 202, and the first filter 203 filters the received radio frequency signal to obtain the first radio frequency signal. The first radio frequency signal enters the radio frequency transceiver module after amplification by the first amplification module 205.

Exemplarily, when the radio frequency front-end module 20 uses the combined antenna solution to receive the second radio frequency signal, the receive path from the ANT1 to the second output terminal Rx2 in the antenna switch 201 is connected. The radio frequency signal received by the ANT1 enters the second filter 204 through the antenna switch 201, and the second filter 204 filters the received radio frequency signal to obtain the second radio frequency signal. The second radio frequency signal enters the radio frequency transceiver module after amplification by the second amplification module 206.

In another implementation, when the radio frequency front-end module 20 uses the separated antenna solution to receive a signal, the antenna switch 201 and the single pole double throw switch 202 in the radio frequency front-end module 20 may gate on a filter (referred to as a target filter) corresponding to the target radio frequency signal. In this case, after a radio frequency signal received by the ANT2 enters the radio frequency front-end module 20, the target radio frequency signal is obtained through filtering by the target filter. Further, the target radio frequency signal is then amplified by an amplification module connected to the target filter, to obtain an amplified radio frequency signal. Finally, the amplified radio frequency signal enters the radio frequency transceiver module, so that the target radio frequency signal is received.

Exemplarily, when the radio frequency front-end module 20 uses the separated antenna solution to receive the first radio frequency signal, the receive path from the ANT1 to the first output terminal Rx1 in the antenna switch 201 is disconnected, and the single pole double throw switch 202 is switched to the contact a2. The radio frequency signal received by the ANT2 enters the first filter 203 through the single pole double throw switch 202, and the first filter 203 filters the received radio frequency signal to obtain the first radio frequency signal. The first radio frequency signal enters the radio frequency transceiver module after amplification by the first amplification module 205. It is to be noted that, the ANT1 shown in FIG. 2 may be a multi-band antenna, and the ANT2 may be a single-band antenna. A receive path connected to the single-band antenna can select a receive antenna through switching of the antenna switch 201 and the single pole double throw switch 202, that is, select the separated antenna solution or the combined antenna solution to receive the radio frequency signal.

It is to be noted that, there may be more than one second antenna. In other words, signals in a plurality of bands may be respectively received through separate antennas. This embodiment of this application is described only by using an example in which a signal in one band is separated. There may also be more than one first antenna and more than one input port of the antenna switch. In other words, there may be a plurality of input ports of the antenna switch for receiving the radio frequency signal. This embodiment of this application is described only by using an example in which there is one input port of the antenna switch.

A quantity of devices such as radio frequency paths, switches, antennas, filters, and low noise amplifiers in the embodiments of this application is used only for exemplary description. Actually, for a device, there may be one or more devices, or the device may not be provided. The quantities are not limited in this application. It is to be noted that, the radio frequency front-end module 20 shown in FIG. 2 may further include a matching network. The matching network may include one or more passive components, and the passive component may be an inductor or a capacitor. The matching network may be used for implementing impedance matching between the antenna and the radio frequency front-end module 20, to ensure maximum power transmission and minimum signal reflection. The inductor may be implemented by a wire wound inductor, a substrate inductor, or an on-chip inductor; and the capacitor may be implemented by a ceramic capacitor, a substrate capacitor, or an on-chip capacitor.

For the radio frequency front-end module 20 provided in this embodiment of this application, an external filter is not required when the separated antenna solution is used, which reduces manufacturing costs.

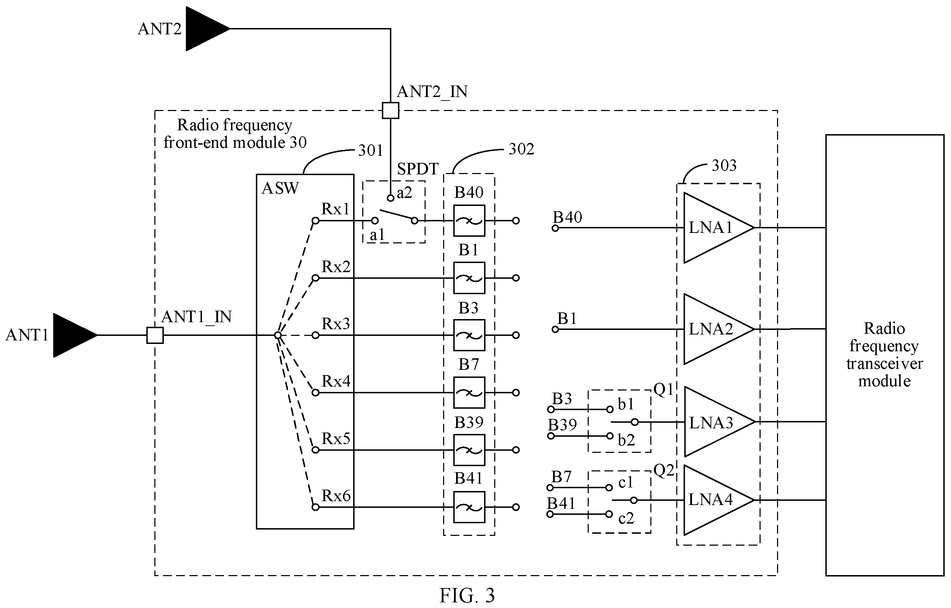

Next, the radio frequency front-end module in FIG. 2 is exemplarily introduced in detail through FIG. 3.

FIG. 3 is an exemplary diagram of a radio frequency front-end module 30 according to an embodiment of this application. The radio frequency front-end module 30 is coupled to an ANT1 and an ANT2. The radio frequency front-end module 30 may receive a radio frequency signal from the ANT1 through a first input port ANT1_IN, and the radio frequency front-end module 30 may receive a radio frequency signal from the ANT2 through a second input port ANT2_IN.

The radio frequency front-end module 30 may include an antenna switch 301, a single pole double throw switch SPDT, a first switch Q1, a second switch Q2, a filter module 302, and an amplifier module 303. The filter module 302 may include a B40 filter, a B1 filter, a B3 filter, a B7 filter, a B39 filter, and a B41 filter. The amplifier module 303 may include a first amplification module (referred to as LNA1 for short), a second amplification module (referred to as LNA2 for short), a third amplification module (referred to as LNA3 for short), and a fourth amplification module (referred to as LNA4 for short). The antenna switch 301 may include one input terminal and six output terminals. The six output terminals are respectively a first output terminal Rx1, a second output terminal Rx2, a third output terminal Rx3, a fourth output terminal Rx4, a fifth output terminal Rx5, and a sixth output terminal Rx6.

The input terminal of the antenna switch 301 is connected to the ANT1 as the first input port ANT1_IN of the radio frequency front-end module 30. The first output terminal Rx1 is connected to a first terminal (also referred to as a contact a1) of the single pole double throw switch SPDT. The second output terminal Rx2, the third output terminal Rx3, the fourth output terminal Rx4, the fifth output terminal Rx5, and the sixth output terminal Rx6 are respectively connected to first terminals of the B1 filter, the B3 filter, the B7 filter, the B39 filter, and the B41 filter.

The antenna switch 301 may be configured to output, through at least one of the six output terminals, the radio frequency signal received by the ANT1. As shown in FIG. 3, the antenna switch 301 may be configured to conduct the radio frequency signal received by the ANT1 to at least one of the single pole double throw switch SPDT, the B1 filter, the B3 filter, the B7 filter, the B39 filter, and the B41 filter.

The single pole double throw switch SPDT may be configured to connect a receive path from the ANT2 to the B40 filter or connect a receive path from the antenna switch 301 to the B40 filter. The first terminal of the single pole double throw switch SPDT is connected to the first output terminal Rx1, a second terminal (also referred to as a contact a2) of the single pole double throw switch SPDT is connected to the ANT2 as the second input port ANT2_IN of the radio frequency front-end module 30, and a common terminal of the single pole double throw switch SPDT is connected to a first terminal of the B40 filter.

When the single pole double throw switch SPDT is switched to the contact a1, the single pole double throw switch SPDT connects the receive path from the antenna switch 301 to the B40 filter; and when the single pole double throw switch SPDT is switched to the contact a2, the single pole double throw switch SPDT connects the receive path from the ANT2 to the B40 filter.

The first terminal of the B40 filter is connected to the common terminal of the single pole double throw switch SPDT, and a second terminal of the B40 filter is connected to a first terminal of the LNA 1. The first terminal of the B1 filter is connected to the second output terminal Rx2, and a second terminal of the B1 filter is connected to a first terminal of the LNA2. The first terminal of the B3 filter is connected to the third output terminal Rx3, and a second terminal of the B3 filter is connected to a first terminal (also referred to as a contact b1) of the first switch Q1. The first terminal of the B7 filter is connected to the fourth output terminal Rx4, and a second terminal of the B7 filter is connected to a first terminal (also referred to as a contact c1) of the second switch Q2. The first terminal of the B39 filter is connected to the fifth output terminal Rx5, and a second terminal of the B39 filter is connected to a second terminal (also referred to as a contact b2) of the first switch Q1. The first terminal of the B41 filter is connected to the sixth output terminal Rx6, and a second terminal of the B41 filter is connected to a second terminal (also referred to as a contact c2) of the second switch Q2.

The B40 filter, the B1 filter, the B3 filter, the B7 filter, the B39 filter, and the B41 filter are respectively filters corresponding to a B40 signal, a B1 signal, a B3 signal, a B7 signal, a B39 signal, and a B41 signal; and the B40 filter, the B1 filter, the B3 filter, the B7 filter, the B39 filter, and the B41 filter may be respectively configured to filter out a signal other than the B40 signal, a signal other than the B1 signal, a signal other than the B3 signal, a signal other than the B7 signal, a signal other than the B39 signal, and a signal other than the B41 signal.

The first switch Q1 may be configured to connect a receive path from the B3 filter to the LNA3 or a receive path from the B39 filter to the LNA3. The first terminal of the first switch Q1 is connected to the second terminal of the B3 filter, the second terminal of the first switch Q1 is connected to the second terminal of the B39 filter, and a common terminal of the first switch Q1 is connected to a first terminal of the LNA3. Exemplarily, the first switch Q1 may be a single pole double throw switch.

When the first switch Q1 is switched to the contact b1, the first switch Q1 connects the receive path from the B3 filter to the LNA3. When the first switch Q1 is switched to the contact b2, the first switch Q1 connects the receive path from the B39 filter to the LNA3.

The second switch Q2 may be configured to connect a receive path from the B7 filter to the LNA4 or a receive path from the B41 filter to the LNA4. The first terminal of the second switch Q2 is connected to the second terminal of the B7 filter, the second terminal of the second switch Q2 is connected to the second terminal of the B41 filter, and a common terminal of the second switch Q2 is connected to a first terminal of the LNA4. Exemplarily, the first switch Q1 may be a single pole double throw switch.

When the second switch Q2 is switched to the contact c1, the second switch Q2 connects the receive path from the B7 filter to the LNA4. When the first switch Q1 is switched to the contact c2, the second switch Q2 connects the receive path from the B41 filter to the LNA4.

A second terminal of the LNA1, a second terminal of the LNA2, a second terminal of the LNA3, and a second terminal of the LNA4 are separately connected to a radio frequency transceiver module, which may be configured to amplify a received radio frequency signal. The LNA1, the LNA2, the LNA3, and the LNA4 are low noise amplifiers, and may simultaneously process the radio frequency signal.

It is to be noted that, the ANT1 shown in FIG. 3 may be a multi-band antenna, and the ANT2 may be a single-band antenna. A radio frequency signal received by the ANT1 may include a signal in any one of a B1 band, a B3 band, a B7 band, a B39 band, a B40 band, and a B41 band. A radio frequency signal received by the ANT2 may include a signal in a B40 band (referred to as a B40 signal for short).

The radio frequency front-end module 30 may simultaneously receive a plurality of radio frequency signals. The radio frequency front-end module 30 may select to use the combined antenna solution or the separated antenna solution to receive the B40 signal, and use the combined antenna solution to receive another radio frequency signal. This embodiment of this application is described with an example in which B40 is separated exemplarily. In other embodiments, one or more radio frequency signals in other bands may alternatively be separated and received through a single antenna.

It should be understood that, for a specific band, the separated antenna solution and the combined antenna solution are mutually exclusive. However, for different bands, the separated antenna solution and the combined antenna solution may be respectively used. For example, for the band B32, a product also involves the separated antenna solution or the combined antenna solution, and the product may involve any combination of: B32 combined antenna solution+B40 separated antenna solution, B32 combined antenna solution+B40 combined antenna solution, B32 separated antenna solution+B40 separated antenna solution.

Exemplarily, the radio frequency front-end module 30 may use the combined antenna solution to receive the B40 signal, the B1 signal, and the B39 signal. In this case, the antenna switch 301 may connect the paths from the first input port ANT1_IN to the first output terminal Rx1, the second output terminal Rx2, and the fifth output terminal Rx5, the single pole double throw switch SPDT is switched to the contact a1, and the first switch Q1 is switched to the contact b2. The radio frequency signal is fed into the antenna switch 301 from the first input port ANT1_IN, is output from the first output terminal Rx1, and enters the B40 filter through the single pole double throw switch SPDT. The B40 filter filters the received radio frequency signal, to obtain the B40 signal. The B40 signal then enters the radio frequency transceiver module after signal amplification by the LNA1. The radio frequency signal is fed into the antenna switch 301 from the first input port ANT1_IN, and enters the B1 filter through the second output terminal Rx2. The B1 filter filters the received radio frequency signal, to obtain the B1 signal. The B1 signal then enters the radio frequency transceiver module after signal amplification. The radio frequency signal is fed into the antenna switch 301 from the first input port ANT1_IN, is output from the fifth output terminal Rx5, and enters the B39 filter through the first switch Q1. The B39 filter filters the received radio frequency signal, to obtain the B39 signal. The B39 signal then enters the radio frequency transceiver module after signal amplification by the LNA3, so that the radio frequency signal is received.

Alternatively, the radio frequency front-end module 30 may use the separated antenna solution to receive the B40 signal, and use the combined antenna solution to receive the B1 signal and the B39 signal. In this case, the antenna switch 301 disconnects the path from the first input port ANT1_IN to the first output terminal Rx1, and connects the paths from the first input port ANT1_IN to the second output terminal Rx2 and the fifth output terminal Rx5. The single pole double throw switch SPDT is switched to the contact a2, and the first switch Q1 is switched to the contact b2. The radio frequency signal is fed into the B40 filter from the second input port ANT2_IN. The B40 filter filters the received radio frequency signal, to obtain the B40 signal. The B40 signal then enters the radio frequency transceiver module after signal amplification by the LNA1, so that the radio frequency signal is received. The radio frequency signal is fed into the antenna switch 301 from the first input port ANT1_IN, and enters the B1 filter through the second output terminal Rx2. The B1 filter filters the received radio frequency signal, to obtain the B1 signal. The B1 signal then enters the radio frequency transceiver module after signal amplification. The radio frequency signal is fed into the antenna switch 301 from the first input port ANT1_IN,is output from the fifth output terminal Rx5, and enters the B39 filter through the first switch Q1. The B39 filter filters the received radio frequency signal, to obtain the B39 signal. The B39 signal then enters the radio frequency transceiver module after signal amplification by the LNA3, so that the radio frequency signal is received.

It is to be noted that, the first antenna ANT1 shown in FIG. 3 may be a multi-band antenna, and the second antenna ANT2 may be a single-band antenna. The radio frequency front-end module 30 may select the receive path through switching of the antenna switch 301 and the single pole double throw switch SPDT, that is, select the separated antenna solution or the combined antenna solution to receive the radio frequency signal.

It should be understood that, the first switch Q1 and the second switch Q2 may be configured to switch the receive path, select a designated radio frequency signal to enter a subsequent low noise amplifier, and change based on changes of a quantity of filters and a quantity of LNA amplifiers. A quantity of devices such as radio frequency paths, switches, antennas, filters, and low noise amplifiers in the embodiments of this application is used only for exemplary description. Actually, for a device, there may be one or more devices, or the device may not be provided. The quantities are not limited in this application. The antenna switch 301 in this embodiment of this application may have a single ANT port, or may have a plurality of ANT ports. Descriptions provided herein are merely exemplary.

In some embodiments, the radio frequency front-end module 30 is further connected to a controller. The controller may be configured to control turning on or turning off of each circuit in the antenna switch 301, and may be further configured to control switching of the receive paths of the single pole double throw switch SPDT, the first switch Q1, and the second switch Q2. Exemplarily, the controller may be connected to the radio frequency front-end module shown in FIG. 3. When receiving an instruction of using the combined antenna solution to receive the B40 signal, the B1 signal, and the B39 signal, the controller controls the antenna switch 301 to connect the paths from the first input port ANT1_IN to the first output terminal Rx1, the second output terminal Rx2, and the fifth output terminal Rx5 and disconnect circuits from the first input port ANT1_IN to the third output terminal Rx3, the fourth output terminal Rx4, and the sixth output terminal Rx6, controls the single pole double throw switch SPDT to be switched to the contact a1, and controls the first switch Q1 to be switched to the contact b2. When receiving an instruction of using the separated antenna solution to receive the B40 signal, the controller controls the antenna switch 301 to disconnect the path from the first input port ANT1_IN to the first output terminal Rx1, and controls the single pole double throw switch SPDT to be switched to the contact a2. The antenna switch 301, the single pole double throw switch SPDT, the first switch Q1, and the second switch Q2 may be controlled by one controller, or may be respectively controlled by a plurality of controllers. This is not limited in this embodiment of this application.

It should be understood that, the controller determines, based on a target radio frequency signal, a target antenna corresponding to the target radio frequency signal, and the controller controls the radio frequency front-end module 30 to connect a receive path corresponding to the target antenna. A specific connecting process is that the radio frequency front-end module 30 controls switching of the antenna switch 301 and the single pole double throw switch SPDT.

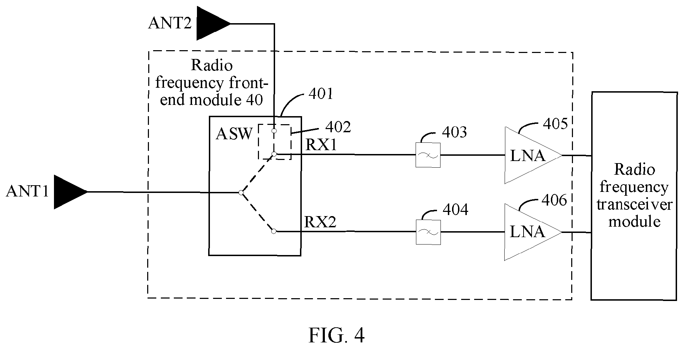

FIG. 4 is a schematic diagram of a structure of another radio frequency front-end module 40 according to an embodiment of this application. The radio frequency front-end module 40 is coupled to a first antenna (referred to as ANT1 for short) and a second antenna (referred to as ANT2 for short) to receive a radio frequency signal, processes the received radio frequency signal, and then sends a processed radio frequency signal to a lower-level conversion circuit (such as a radio frequency transceiver module exemplarily shown in FIG. 4).

As shown in FIG. 4, the radio frequency front-end module 40 includes an antenna switch 401, a first filter 403, a second filter 404, a first amplification module 405, and a second amplification module 406. The antenna switch 401 may include a single pole single throw switch 402. The antenna switch 401 may be configured to conduct a received radio frequency signal to the first filter 403 and/or the second filter 404.

In other words, the antenna switch 401 may be configured to gate on a receive path for conducting the radio frequency signal to the first filter 403 and/or gate on a receive path for conducting the radio frequency signal to the second filter 404. A first input port of the antenna switch 401 is connected to the ANT1, a first output terminal Rx1 is connected to a first terminal of the first filter 403, and a second output terminal Rx2 is connected to a first terminal of the second filter 404.

The single pole single throw switch 402 is configured to conduct a signal received by the ANT1 or a signal received by the ANT2 to the first filter 403. A first terminal of the single pole single throw switch 402 is connected to the first terminal of the first filter 403, and a second terminal of the single pole single throw switch 402 is connected to a first terminal of the ANT2 as a second input port. When the single pole single throw switch 402 is turned on, a receive path from the ANT2 to the first filter 403 is connected; and when the single pole single throw switch 402 is turned off, the receive path from the ANT2 to the first filter 403 is disconnected.

The first filter 403 is a filter corresponding to a first radio frequency signal, and the first filter 403 may be configured to filter out a signal other than the first radio frequency signal. The first terminal of the first filter 403 is connected to the first output terminal Rx1 of the antenna switch 401, and a second terminal of the first filter 403 is connected to a first terminal of the first amplification module 405.

The second filter 404 is a filter corresponding to a second radio frequency signal, and the second filter 404 may be configured to filter out a signal other than the second radio frequency signal. The first terminal of the second filter 404 is connected to the second output terminal Rx2 of the antenna switch 401, and a second terminal of the second filter 404 is connected to a first terminal of the second amplification module 406. A band of the first radio frequency signal is different from a band of the second radio frequency signal.

The first amplification module 405 and the second amplification module 406 may be configured to amplify a received radio frequency signal. The first terminal of the first amplification module 405 is connected to the second terminal of the first filter 403, and a second terminal of the first amplification module 405 is connected to the radio frequency transceiver module. The first terminal of the second amplification module 406 is connected to the second terminal of the second filter 404, and a second terminal of the second amplification module 406 is connected to the radio frequency transceiver module. Both the first amplification module 405 and the second amplification module 406 may be low noise amplifiers.

In an implementation, when the radio frequency front-end module 40 uses the combined antenna solution to receive a target radio frequency signal, the antenna switch 401 in the radio frequency front-end module 40 may gate on a filter (referred to as a target filter) corresponding to the target radio frequency signal. In this case, after a radio frequency signal received by the ANT1 enters the radio frequency front-end module 40, the target radio frequency signal is obtained through filtering by the target filter. Further, the target radio frequency signal is then amplified by an amplification module connected to the target filter, to obtain an amplified radio frequency signal. Finally, the amplified radio frequency signal enters the radio frequency transceiver module, so that the target radio frequency signal is received. The target radio frequency signal may be the foregoing first radio frequency signal and/or the foregoing second radio frequency signal.

Exemplarily, when the radio frequency front-end module 40 uses the combined antenna solution to receive the first radio frequency signal, a path from the ANT1 to the first output terminal Rx1 in the antenna switch 401 is connected, and the single pole single throw switch 402 is turned off. The radio frequency signal received by the ANT1 enters the first filter 403 through the antenna switch 401, and the first filter 403 filters the received radio frequency signal to obtain the first radio frequency signal. The first radio frequency signal enters the radio frequency transceiver module after amplification by the first amplification module 405.

Exemplarily, when the radio frequency front-end module 40 uses the combined antenna solution to receive the second radio frequency signal, a path from the ANT1 to the second output terminal Rx2 in the antenna switch 401 is connected. The radio frequency signal received by the ANT1 enters the second filter 404 through the antenna switch 401, and the second filter 404 filters the received radio frequency signal to obtain the second radio frequency signal. The second radio frequency signal enters the radio frequency transceiver module after amplification by the second amplification module 406.

In another implementation, when the radio frequency front-end module 40 uses the separated antenna solution to receive a signal, the antenna switch 401 in the radio frequency front-end module 40 may gate on a filter (referred to as a target filter) corresponding to the target radio frequency signal. In this case, after a radio frequency signal received by the ANT2 enters the radio frequency front-end module 40, the target radio frequency signal is obtained through filtering by the target filter. Further, the target radio frequency signal is then amplified by an amplification module connected to the target filter, to obtain an amplified radio frequency signal. Finally, the amplified radio frequency signal enters the radio frequency transceiver module, so that the target radio frequency signal is received.

Exemplarily, when the radio frequency front-end module 40 uses the separated antenna solution to receive the first radio frequency signal, a path from the ANT1 to the first output terminal Rx1 in the antenna switch 401 is disconnected, and the single pole single throw switch 402 is turned on. The radio frequency signal received by the ANT2 enters the first filter 403 through the single pole single throw switch 402, and the first filter 403 filters the received radio frequency signal to obtain the first radio frequency signal. The first radio frequency signal enters the radio frequency transceiver module after amplification by the first amplification module 405. It is to be noted that, the ANT1 shown in FIG. 4 may be a multi-band antenna, and the ANT2 may be a single-band antenna. A receive path connected to the single-band antenna can select a receive antenna through switching of the antenna switch 401, that is, select the separated antenna solution or the combined antenna solution to receive the radio frequency signal.

It is to be noted that, there is more than one second antenna. In other words, signals in a plurality of bands may be respectively introduced through separate antennas. This embodiment of this application is described only by using an example in which a signal in one band is separated. There are more than one first antenna and more than one input port of the antenna switch. In other words, there may be a plurality of input ports of the antenna switch for receiving the radio frequency signal. This embodiment of this application is described only by using an example in which there is one input port of the antenna switch.

An external filter is not used in the radio frequency front-end module 40 provided in this embodiment of this application. In addition, for the combined antenna solution, the receive path from the ANT1 to the first filter 403 and/or the receive path from the ANT1 to the second filter 404 is consistent with that in the foregoing radio frequency front-end module 20 provided in the FIG. 2 without introducing an additional loss.

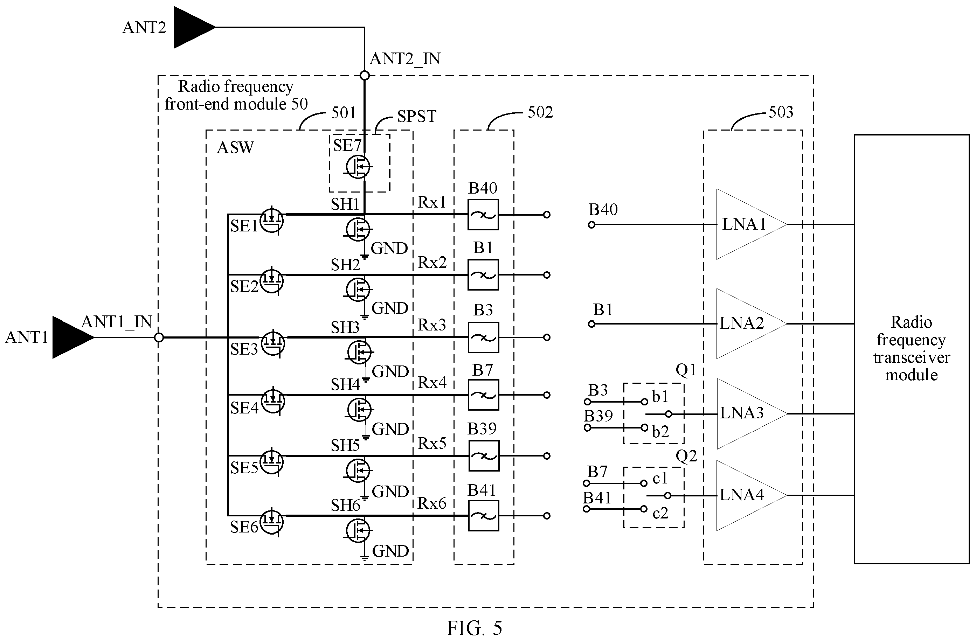

Next, the radio frequency front-end module in FIG. 4 is exemplarily introduced in detail through FIG. 5.

FIG. 5 is an exemplary diagram of a radio frequency front-end module 50 according to an embodiment of this application. The radio frequency front-end module 50 is coupled to an ANT1 and an ANT2. The radio frequency front-end module 50 may receive a radio frequency signal from the ANT1 through a first input port ANT1_IN, and the radio frequency front-end module 50 may receive a radio frequency signal from the ANT2 through a second input port ANT2_IN. The radio frequency front-end module 50 may process the received radio frequency signal and then transmit a processed radio frequency signal to a lower-level conversion circuit (such as a radio frequency transceiver module exemplarily shown in FIG. 5).

The radio frequency front-end module 50 may include an antenna switch 501, a single pole single throw switch SPST, a first switch Q1, a second switch Q2, a filter module 502, and an amplifier module 503. The antenna switch 501 may include switch transistors SE1 to SE7 and switch transistors SH1 to SH6. The filter module 502 may include a B40 filter, a B1 filter, a B3 filter, a B7 filter, a B39 filter, and a B41 filter. The amplifier module 503 may include a first amplification module (referred to as LNA1 for short), a second amplification module (referred to as LNA2 for short), a third amplification module (referred to as LNA3 for short), and a fourth amplification module (referred to as LNA4 for short). The switch transistor SH1 may be referred to as a third switch transistor, and any one of switch transistors SH2 to SH6 may be referred to as a fourth switch transistor.

In this embodiment of this application, the single pole single throw switch SPST is a switch transistor SE7. A first terminal of the single pole single throw switch SPST is connected to a first terminal of the B40 filter, and a second terminal of the single pole single throw switch is connected to the ANT2 as the second input port ANT1_IN, which may be configured to switch a receive path. When the single pole single throw switch SPST is turned on, a receive path from the ANT2 to the B40 filter is connected; and when the single pole single throw switch SPST is turned off, the receive path from the ANT2 to the B40 filter is disconnected. Exemplarily, the single pole single throw switch SPST may be a MOS transistor.

The antenna switch 301 may include one input terminal and six output terminals. The six output terminals are respectively a first output terminal Rx1, a second output terminal Rx2, a third output terminal Rx3, a fourth output terminal Rx4, a fifth output terminal Rx5, and a sixth output terminal Rx6.

The input terminal of the antenna switch 501 is connected to the ANT1 as the first input port ANT1_IN of the radio frequency front-end module 50. A first terminal of the switch transistor SE1 is connected to the first input port ANT1_IN, a second terminal of the switch transistor SE1 is connected to a first terminal of the switch transistor SH1, and a second terminal of the switch transistor SH1 is grounded. The switch transistor SE2 is connected to the switch transistor SH2, the switch transistor SE3 is connected to the switch transistor SH3, the switch transistor SE4 is connected to the switch transistor SH4, the switch transistor SE5 is connected to the switch transistor SH5, and the switch transistor SE6 is connected to the switch transistor SH6. For specific connection manners, refer to a connection manner between the switch transistor SE1 and the switch transistor SH1, and details are not described herein again. The switch transistors SE1 to SE6 are switch transistors connected in series, and may be configured to connect or disconnect a receive path. The switch transistors SH1 to SH6 are switch transistors connected in parallel, and are configured to improve isolation between radio frequency paths. First terminals of the switch transistor SH1, the switch transistor SH2, the switch transistor SH3, the switch transistor SH4, the switch transistor SH5, and the switch transistor SH6 are respectively connected to first terminals of the B40 filter, the B1 filter, the B3 filter, the B7 filter, the B39 filter, and the B41 filter. The antenna switch 501 may be configured to output, through at least one of the six output terminals, the radio frequency signal received by the ANT1. As shown in FIG. 5, the antenna switch 501 may be configured to conduct the radio frequency signal received by the ANT1 to at least one of the B40 filter, the B1 filter, the B3 filter, the B7 filter, the B39 filter, and the B40 filter.

The first terminal of the B40 filter is connected to the first output terminal Rx1, and a second terminal of the B40 filter is connected to a first terminal of the LNA1. The first terminal of the B1 filter is connected to the second output terminal Rx2, and a second terminal of the B1 filter is connected to a first terminal of the LNA2. The first terminal of the B3 filter is connected to the third output terminal Rx3, and a second terminal of the B3 filter is connected to a first terminal (also referred to as a contact b1) of the first switch Q1. The first terminal of the B7 filter is connected to the fourth output terminal Rx4, and a second terminal of the B7 filter is connected to a first terminal (also referred to as a contact c1) of the second switch Q2. The first terminal of the B39 filter is connected to the fifth output terminal Rx5, and a second terminal of the B39 filter is connected to a second terminal (also referred to as a contact b2) of the first switch Q1. The first terminal of the B41 filter is connected to the sixth output terminal Rx6, and a second terminal of the B41 filter is connected to a second terminal (also referred to as a contact c2) of the second switch Q2.

The B40 filter, the B1 filter, the B3 filter, the B7 filter, the B39 filter, and the B41 filter are respectively filters corresponding to a B40 signal, a B1 signal, a B3 signal, a B7 signal, a B39 signal, and a B41 signal; and the B40 filter, the B1 filter, the B3 filter, the B7 filter, the B39 filter, and the B41 filter may be respectively configured to filter out a signal other than the B40 signal, a signal other than the B1 signal, a signal other than the B3 signal, a signal other than the B7 signal, a signal other than the B39 signal, and a signal other than the B41 signal.

The first switch Q1 may be configured to connect a receive path from the B3 filter to the LNA3 or a receive path from the B39 filter to the LNA3. The first terminal of the first switch Q1 is connected to the second terminal of the B3 filter, the second terminal of the first switch Q1 is connected to the second terminal of the B39 filter, and a common terminal of the first switch Q1 is connected to a first terminal of the LNA3. Exemplarily, the first switch Q1 may be a single pole double throw switch.

When the first switch Q1 is switched to the contact b1, the first switch Q1 connects the receive path from the B3 filter to the LNA3. When the first switch Q1 is switched to the contact b2, the first switch Q1 connects the receive path from the B39 filter to the LNA3.

The second switch Q2 may be configured to connect a receive path from the B7 filter to the LNA4 or a receive path from the B41 filter to the LNA4. The first terminal of the second switch Q2 is connected to the second terminal of the B7 filter, the second terminal of the second switch Q2 is connected to the second terminal of the B41 filter, and a common terminal of the second switch Q2 is connected to a first terminal of the LNA4. Exemplarily, the first switch Q1 may be a single pole double throw switch.

When the second switch Q2 is switched to the contact c1, the second switch Q2 connects the receive path from the B7 filter to the LNA4. When the first switch Q1 is switched to the contact c2, the second switch Q2 connects the receive path from the B41 filter to the LNA4.

A second terminal of the LNA1, a second terminal of the LNA2, a second terminal of the LNA3, and a second terminal of the LNA4 are separately connected to a radio frequency transceiver module, which may be configured to amplify a received radio frequency signal. The LNA1, the LNA2, the LNA3, and the LNA4 are low noise amplifiers, and may simultaneously process the radio frequency signal.

It is to be noted that, the ANT1 shown in FIG. 5 may be a multi-band antenna, and the ANT2 may be a single-band antenna. A radio frequency signal received by the ANT1 may include a signal in any one of a B1 band, a B3 band, a B7 band, a B39 band, a B40 band, and a B41 band. A radio frequency signal received by the ANT2 may include a signal in a B40 band (referred to as a B40 signal for short).

The radio frequency front-end module 50 may simultaneously receive a plurality of radio frequency signals. The radio frequency front-end module 50 may select to use the combined antenna solution or the separated antenna solution to receive the B40 signal, and use the combined antenna solution to receive another radio frequency signal. This embodiment of this application is described with an example in which B40 is separated exemplarily. In other embodiments, one or more radio frequency signals in other bands may alternatively be separated and received through a single antenna.

Exemplarily, the radio frequency front-end module 50 may use the combined antenna solution to receive the B40 signal, the B1 signal, and the B39 signal. In this case, the switch transistor SE1, the switch transistor SE2, and the switch transistor SE5 are turned on, the switch transistor SH1, the switch transistor SH2, and the switch transistor SH5 are turned off, the switch transistor SE3, the switch transistor SE4, the switch transistor SE6, and the switch transistor SE7 are turned off, the switch transistor SH3, the switch transistor SH4, and the switch transistor SH6 are turned on, and the first switch Q1 is switched to the contact b2. The radio frequency signal received by the ANT1 enters the B40 filter through the antenna switch 501, and the B40 filter filters the received radio frequency signal to obtain the B40 signal. The B40 signal then enters the radio frequency transceiver module after signal amplification by the first amplification module LNA1. The radio frequency signal received by the ANT1 enters the B1 filter through the antenna switch 501, and the B1 filter filters the received radio frequency signal to obtain the B1 signal. The B1 signal then enters the radio frequency transceiver module after signal amplification by the second amplification module LNA2. The radio frequency signal received by the ANT1 enters the B39 filter through the antenna switch 501, and the B39 filter filters the received radio frequency signal to obtain the B39 signal. The B39 signal then enters the radio frequency transceiver module after signal amplification by the third amplification module LNA3, so that the radio frequency signal is received.

Alternatively, the radio frequency front-end module 30 may use the separated antenna solution to receive the B40 signal, and use the combined antenna solution to receive the B1 signal and the B39 signal. The switch transistor SE1 is turned off. The switch transistor SE2, the switch transistor SE5, and the switch transistor SE7 are turned on. The switch transistor SH1, the switch transistor SH2, and the switch transistor SH5 are turned off. The switch transistor SE3, the switch transistor SE4, and the switch transistor SE6 are turned off. The switch transistor SH3, the switch transistor SH4, and the switch transistor SH6 are turned on. The first switch Q1 is switched to the contact b2. The radio frequency signal received by the ANT2 enters the B40 filter through the antenna switch 501, and the B40 filter filters the received radio frequency signal to obtain the B40 signal. The B40 signal then enters the radio frequency transceiver module after signal amplification by the LNA1, so that the radio frequency signal is received.

It should be understood that, the first switch Q1 and the second switch Q2 may be configured to switch the receive path, select a designated radio frequency signal to enter a subsequent low noise amplifier, and change based on changes of a quantity of filters and a quantity of LNA amplifiers. A quantity of devices such as radio frequency paths, switches, antennas, filters, and low noise amplifiers in the embodiments of this application is used only for exemplary description. Actually, for a device, there may be one or more devices, or the device may not be provided. The quantities are not limited in this application.

In some embodiments, the radio frequency front-end module 50 is further connected to a controller. The controller is connected to control terminals of the switch transistors SE1 to SE7 and the switch transistors SH1 to SH6 in the antenna switch 501, may be configured to control turning on and turning off of each circuit in the antenna switch 501, and may be further configured to control switching of receive paths of the first switch Q1 and the second switch Q2. Exemplarily, the controller may be connected to the radio frequency front-end module shown in FIG. 5. When receiving an instruction of using the combined antenna solution to receive the B40 signal, the B1 signal, and the B39 signal, the controller controls the switch transistor SE1, the switch transistor SE2, and the switch transistor SE5 to be turned on, the switch transistor SH1, the switch transistor SH2, and the switch transistor SH5 to be turned off, the switch transistor SE3, the switch transistor SE4, the switch transistor SE6, and the switch transistor SE7 to be turned off, the switch transistor SH3, the switch transistor SH4, and the switch transistor SH6 to be turned on, and the first switch Q1 to be switched to the contact b2. The antenna switch 501, the first switch Q1, and the second switch Q2 may be controlled by one controller, or may be respectively controlled by a plurality of controllers. This is not limited in this embodiment of this application.

It should be understood that, the controller determines, based on a target radio frequency signal, a target antenna corresponding to the target radio frequency signal, and the controller controls the radio frequency front-end module 50 to connect a receive path corresponding to the target antenna. A specific connecting process is that the radio frequency front-end module 50 controls the antenna switch 501.

In some other embodiments of this application, the single pole single throw switch SPST may be located outside the antenna switch 501. The first terminal of the single pole single throw switch SPST is connected to the first terminal of the B40 filter, and the second terminal of the single pole single throw switch SPST is connected to the second antenna ANT2 as the second input port ANT2_IN of the radio frequency front-end module 50.

It should be understood that, the antenna switch and the radio frequency front-end module are not limited to a structure of the antenna switch and a connection structure of the radio frequency front-end module that are shown in FIG. 5, and may be other structures. Description herein is merely exemplary.

It is to be noted that, quantities of switch transistors SE1 to switch transistors SE7, switch transistors SH1 to switch transistors SH6, filters, low noise amplifiers, and the like are merely exemplary descriptions, and are not limited. In the radio frequency front-end modules shown in FIG. 4 and FIG. 5, each switch transistor is described by using an N-channel enhancement-mode MOS transistor as an example. In some other embodiments, each switch transistor in FIG. 4 and FIG. 5 may be replaced with a switch transistor of another type, such as a PNP transistor. In this case, each interface is replaced as needed. This is not limited in this embodiment of this application.

It is to be noted that, in the radio frequency front-end modules shown in FIG. 2 to FIG. 5, the filter may be a surface acoustic wave (surface acoustic wave, SAW) filter, a bulk acoustic wave (Bulk Acoustic Wave, BAW) filter, or a low temperature co-fired ceramic (Low Temperature Co-fired Ceramic, LTCC) filter. The low noise amplifier may be implemented through a Si process or a SiGe process. This is not limited in the embodiments of this application.

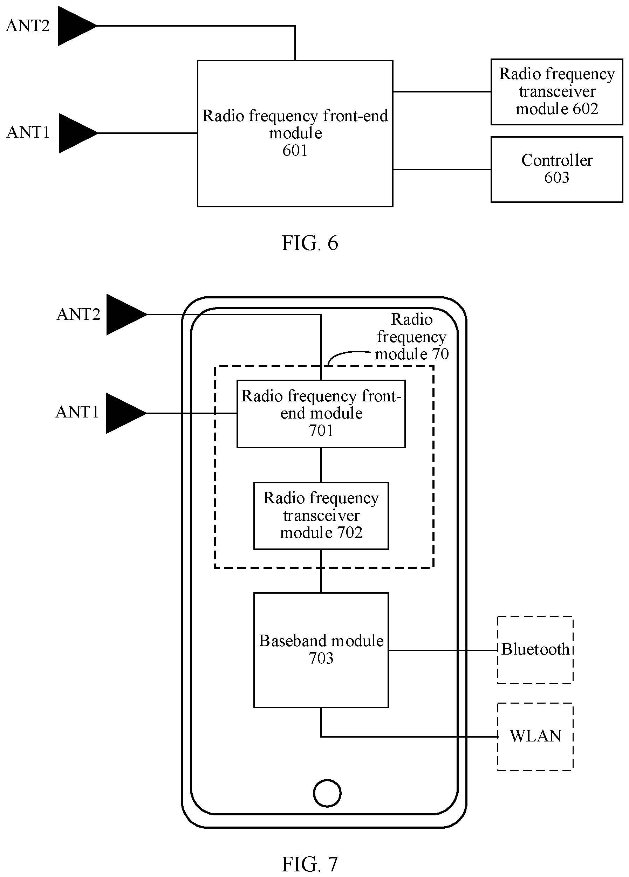

FIG. 6 is an exemplary schematic diagram of a structure of a wireless communication system according to an embodiment of this application. As shown in FIG. 6, the wireless communication system includes an ANT1, an ANT2, a radio frequency front-end module 601, and a controller 603. Optionally, the wireless communication system includes a radio frequency transceiver module 602. The radio frequency front-end module 601 may be any one of the radio frequency front-end modules in FIG. 2 to FIG. 5, such as the radio frequency front-end module 20 in FIG. 2.

The ANT1 and the ANT2 may be configured to receive a radio frequency signal. The radio frequency front-end module 601 may be configured to perform processing, such as filtering and amplification, on a received radio frequency signal. The radio frequency transceiver module 602 may be configured to receive a processed radio frequency signal. The controller 603 may be configured to control the radio frequency front-end module 601 to receive a radio frequency signal. For a specific process in which the controller 603 controls the radio frequency front-end module 601 to receive a radio frequency signal, refer to the following embodiment shown in FIG. 7.

It is to be noted that, for specific content of the ANT1 and the ANT2, refer to related descriptions of the ANT1 and the ANT2 in FIG. 2 to FIG. 5, and details are not described herein again.

It should be understood that, the ANT1 and the ANT2 may be further configured to send a signal. The embodiments of this application describe merely a signal receiving process of the wireless communication system, and do not limit other functions of the ANT1 and the ANT2. The ANT1 and the ANT2 may be antenna units that simultaneously transmit and receive multi-band signals, or a combination of a plurality of antenna units that respectively transmit and receive signals in different bands. This is not specifically limited herein in this application.

Based on the wireless communication system shown in FIG. 6, an embodiment of this application further provides a control method for controlling a radio frequency front-end module. The control method may be performed by the controller in the wireless communication system, to control the radio frequency front-end module. The radio frequency front-end module may include a single pole single throw switch, an antenna switch, a filter module, and a low noise amplifier.

Exemplarily, for the radio frequency front-end module in this embodiment of this application, refer to the foregoing radio frequency front-end module 20, the radio frequency front-end module 30, the radio frequency front-end module 40, and the radio frequency front-end module 50.

The control method may include a part of or all of the following steps.

S1: The controller controls, in response to a first instruction, the radio frequency front-end module to receive a target radio frequency signal from an ANT1.

The first instruction instructs the controller to control the radio frequency front-end module to receive the target radio frequency signal from the ANT1.

Exemplarily, the wireless communication system includes the radio frequency front-end module 30 and the first antenna ANT1 in FIG. 3. When receiving an instruction of using the ANT1 to receive a B40 signal, a B1 signal, and a B39 signal, the controller controls switches from the first input port ANT1_IN to the first output terminal Rx1, the second output terminal Rx2, and the fifth output terminal Rx5 in the antenna switch 301 to be turned on, the single pole double throw switch SPDT to be switched to the contact a1, and the first switch Q1 to be switched to the contact b2.

Exemplarily, the wireless communication system includes the radio frequency front-end module 50 and the first antenna ANT1 in FIG. 5. When receiving an instruction of using the ANT1 to receive the B40 signal, the B1 signal, and the B39 signal, the controller controls switches from the first input port ANT1_IN to the first output terminal Rx1, the second output terminal Rx2, and the fifth output terminal Rx5 in the antenna switch 501 to be turned on, the single pole single throw switch SPST to be turned off, and the first switch Q1 to be switched to the contact b2.

S2: The controller controls, in response to a second instruction, the radio frequency front-end module to receive a target radio frequency signal from an ANT2.

The second instruction instructs the controller to control the radio frequency front-end module to receive the target radio frequency signal from the ANT2.

Exemplarily, the wireless communication system includes the radio frequency front-end module 30 and the second antenna ANT2 that are used in FIG. 3. When receiving an instruction of using the ANT2 to receive the B40 signal, the controller controls a switch from the first input port ANT1_IN to the first output terminal Rx1 in the antenna switch to be turned off, and the single pole double throw switch SPDT to be switched to the contact a1.

Exemplarily, the wireless communication system includes the radio frequency front-end module 50 and the second antenna ANT2 in FIG. 5. When receiving an instruction of using the ANT2 to receive the B40 signal, the controller controls the switch from the first input port ANT1_IN to the first output terminal Rx1 in the antenna switch to be turned off, and the single pole single throw switch SPST to be turned on.

It is to be noted that, an execution order between step S1 and step S2 is not limited in this embodiment of this application.

The foregoing radio frequency front-end module (or the foregoing wireless communication system) may be installed in an electronic device. For example, the foregoing wireless communication may be installed in the electronic device, and the electronic device may perform the foregoing control method through the foregoing controller.

The electronic device may be a portable terminal device carrying iOS^{®}, Android^{®}, Microsoft^{®}, or another operating system, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, or a smart household device and/or a smart city device.

The following exemplarily describes the radio frequency front-end module provided in this embodiment of this application by using an example in which a mobile phone performs signal receiving.

FIG. 7 is an exemplary schematic diagram of a wireless communication module in a mobile phone according to an embodiment of this application. The wireless communication module is configured to implement signal receiving, and the wireless communication module includes a radio frequency front-end module 701. The radio frequency front-end module 701 may be any one of the foregoing radio frequency front-end module 20, the radio frequency front-end module 30, the radio frequency front-end module 40, and the radio frequency front-end module 50.

As shown in FIG. 7, the wireless communication module may include an ANT1, an ANT2, a radio frequency module 70, and a baseband module 703. The radio frequency module 70 may include the radio frequency front-end module 701 and a radio frequency transceiver module 702. The ANT1 and the ANT2 are connected to the radio frequency front-end module 701, the radio frequency front-end module 701 is connected to the radio frequency transceiver module 702, and the radio frequency transceiver module 702 is connected to the baseband module 703.

The ANT1 and the ANT2 may be configured to receive a radio frequency signal, and transmit the received radio frequency signal to the radio frequency front-end module 701.

The radio frequency front-end module 701 may be configured to perform processing, such as filtering and amplification, on the received radio frequency signal, and then transmit a processed radio frequency signal to the radio frequency transceiver module 702. The radio frequency transceiver module 702 may be configured to convert the radio frequency signal into a baseband signal, and transmit the baseband signal to the baseband module 703. The baseband module 703 may decode the received baseband signal, to extract useful information or data, and then send the information or data to a corresponding module, such as a Bluetooth module or a WLAN module, of the mobile phone.

In some embodiments, the wireless communication module receives a Bluetooth signal or a WLAN signal through the antenna ANT1. The received Bluetooth signal or WLAN signal is processed by the radio frequency module 70 and the baseband module 703, and is then sent to the Bluetooth module or the WLAN module.

In some other embodiments, the wireless communication module receives a Bluetooth signal or a WLAN signal through the antenna ANT2. The received Bluetooth signal or WLAN signal is processed by the radio frequency module 70 and the baseband module 703, and is then sent to the Bluetooth module or the WLAN module.

It should be understood that, according to the wireless communication module in FIG. 7, the mobile phone may perform wireless communication with a terminal device, a network device (such as a server and a base station), or the like, to complete an information exchange with the another electronic device.

It is to be noted that, the flowchart described in each embodiment of this application is merely an embodiment. Without departing from the spirit of this application, steps in each flowchart may be modified or changed in a plurality of manners. For example, the steps in the flowchart are performed in different sequences, or some steps are deleted, added, or modified.

A "connection" in the embodiments of this application means an electrical connection, and a connection between two electrical elements may be a direct connection or an indirect connection between the two electrical elements. For example, a connection between A and B may represent that A is directly connected to B, or that A is indirectly connected to B by using one or more other electrical elements. For example, a connection between A and B may also represent that A is directly connected to C, that C is directly connected to B, and that A is connected to B through C.

In the embodiments of this application, the word such as "exemplary" or "for example" is used to represent giving an example, an illustration, or a description. Any embodiment or design scheme described as an "exemplary" or "for example" in the embodiments of this application should not be explained as being more preferred or having more advantages than another embodiment or design scheme. Exactly, use of the word such as "exemplary" or "for example" is intended to present a related concept in a specific manner.

In the embodiments of this application, unless otherwise stated, "a plurality of" means two or more. For example, a plurality of nodes refer to two or more nodes. "At least one" refers to any quantity, for example, one, two, or more than two.

"A and/or B" may represent: including only A, including only B, or including A and B. "At least one of A, B, and C" may represent: including only A, including only B, including only C, including A and B, including B and C, including A and C, or including A, B, and C. Terms "first", "second", "third", "fourth", and the like in this application are merely used for distinguishing between different objects, but are not used for indicating priority or importance of the objects.

Reference of "one embodiment", "some embodiments", or the like described in the specification means that a specific feature, structure, or characteristic described with reference to the embodiment is included in one or more embodiments of this application. In this way, phrases such as "in one embodiment", "in some embodiments", "in other embodiments", "in some other embodiments," and the like that appear in various places in the specification do not necessarily all refer to the same embodiment, but rather mean "one or more but not all embodiments," unless specifically emphasized otherwise.

A person of ordinary skill in the art may be aware that, in combination with the examples of units and algorithm steps described in the embodiments disclosed in this specification, this application may be implemented by using electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

## Claims

1. A radio frequency front-end module, comprising an antenna switch, a single pole double throw switch, a first filter, and a second filter, wherein the first filter and the second filter each correspond to a filtering band; the antenna switch is connected to a first antenna, and the single pole double throw switch is connected to a second antenna;
the antenna switch is configured to gate a radio frequency signal received by the first antenna to the single pole double throw switch and/or the second filter; and
the single pole double throw switch is configured to gate the radio frequency signal passing through the first antenna and the antenna switch or a radio frequency signal received by the second antenna to the first filter.

2. The radio frequency front-end module according to claim 1, wherein a first terminal of the single pole double throw switch is connected to a first output terminal of the antenna switch; and a second terminal of the single pole double throw switch is connected to the second antenna, and a common terminal of the single pole double throw switch is connected to the first filter.

3. The radio frequency front-end module according to claim 1 or 2, wherein an input terminal of the antenna switch is connected to the first antenna; the first output terminal of the antenna switch is connected to the first terminal of the single pole double throw switch; and a second output terminal of the antenna switch is connected to the second filter.

4. The radio frequency front-end module according to any one of claims 1 to 3, further comprising a first amplification module and a second amplification module, wherein the first amplification module is configured to amplify a radio frequency signal outputted by the first filter, and the second amplification module is configured to amplify a radio frequency signal output by the second filter.

5. The radio frequency front-end module according to any one of claims 1 to 4, further comprising a third filter, wherein the third filter, the first filter, and the second filter all correspond to different filtering bands; and the third filter is connected to the antenna switch.

6. The radio frequency front-end module according to claim 5, wherein the antenna switch is specifically configured to send the radio frequency signal received by the first antenna to at least one of the single pole double throw switch, the second filter, and the third filter.

7. A radio frequency front-end module, comprising an antenna switch, a first filter, and a second filter, wherein the first filter and the second filter each correspond to a filtering band; the antenna switch is connected to a first antenna, and the antenna switch is connected to a second antenna; and
the antenna switch is configured to conduct a radio frequency signal of the second antenna to the first filter, or conduct a radio frequency signal of the first antenna to the first filter and/or the second filter.

8. The radio frequency front-end module according to claim 7, wherein the antenna switch is further configured to simultaneously conduct the radio frequency signal of the second antenna to the first filter and conduct the radio frequency signal of the first antenna to the second filter.

9. The radio frequency front-end module according to claim 7 or 8, wherein the antenna switch comprises a single pole single throw switch, a first switch transistor, and a second switch transistor, wherein
the single pole single throw switch is located between the second antenna and the first filter, the first switch transistor is located between the first antenna and the first filter, and the second switch transistor is located between the first antenna and the second filter.

10. The radio frequency front-end module according to claim 9, wherein the first switch transistor when the single pole single throw switch is turned on; and the single pole single throw switch is turned off when the first switch transistor is turned on.

11. The radio frequency front-end module according to any one of claims 7 to 10, wherein the antenna switch further comprises a third switch transistor and a fourth switch transistor SH2, wherein a first terminal of the third switch transistor is connected between the first switch transistor and the first filter, and a second terminal of the third switch transistor is grounded; and a first terminal of the fourth switch transistor is connected between the second switch transistor and the second filter, and a second terminal of the fourth switch transistor is grounded.

12. The radio frequency front-end module according to any one of claims 7 to 11, wherein the radio frequency front end comprises a first amplification module and a second amplification module, wherein the first amplification module is configured to amplify a radio frequency signal output by the first filter, and the second amplification module is configured to amplify a radio frequency signal output by the second filter.

13. An electronic device, comprising the radio frequency front-end module according to any one of claims 1 to 12.
